# EUROPÄISCHE PATENTSCHRIFT

(11) **EP 1 929 594 B1**
(45) Veröffentlichungstag und Bekanntmachung des Hinweises auf die Patenterteilung: **19.10.2011**
(21) Anmeldenummer: 06791761.7
(22) Anmeldetag: 29.08.2006
(51) Int. Cl.: H01S 3/067

(54) **FASERLASER**
FIBER LASER
LASER A FIBRE

(30) Priorität: 31.08.2005 DE 102005042073
(43) Veröffentlichungstag der Anmeldung: 11.06.2008
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: TÜNNERMANN, Andreas, 99425 Weimar (DE); LIMPERT, Jens, 07745 Jena (DE); ORTAC, Bülend, 07745 Jena (DE); SCHREIBER, Thomas, 07749 Jena (DE); NIELSEN, Carsten, K., DK-8200 Arhus N (DK)
(74) Vertreter: Pfenning, Meinig & Partner GbR
(86) Internationale Anmeldenummer: PCT/EP2006/008521
(87) Internationale Veröffentlichungsnummer: WO 2007/025754

(56) Entgegenhaltungen:
- DE-A1- 10 124 983
- US-A1- 2003 156 605
- US-A1- 2005 169 324
- BUCKLEY J R ET AL: "Femtosecond fiber lasers with pulse energies above 10 nJ" OPTICS LETTERS OPT. SOC. AMERICA USA, Bd. 30, Nr. 14, 15. Juli 2005 (2005-07-15), Seiten 1888-1890, XP002466596 ISSN: 0146-9592
- ILDAY F O ET AL: "Self-similar evolution of parabolic pulses in a laser" PHYSICAL REVIEW LETTERS APS USA, Bd. 92, Nr. 21, 28. Mai 2004 (2004-05-28), Seiten 213902/1-4, XP002466597 ISSN: 0031-9007

## Beschreibung

Die Erfindung betrifft einen Faserlaser mit linearem Resonator.

Faserlaser sind grundsätzlich bekannt. Sie bieten sich insbesondere für die Erzeugung ultrakurzer Pulse an und eignen sich somit für verschiedene Gebiete wie Optische Kommunikation, Optische Vermessung, Laser-Chirurgie oder Materialbearbeitung.

In der Industrie sind die Eigenschaften Robustheit, d.h., hohe Lebensdauer und Stabilität, Kompaktheit, Leistung und Aufwand/Kosten wesentliche Kriterien, die über einen Einsatz solch eines Lasers entscheiden. Entsprechend wird eine Entwicklung der Faserlaser in diese Richtung betrieben.

Ein Faserlaser besteht im wesentlichen aus einem optisch-gepumpten Resonator mit einer dotierten Faser als Verstärkungsmedium. Wenn die Verstärkung den optischen Verlust innerhalb des Resonators überwiegt, kann eine Laseroszillation generiert werden.

Dotiert wird üblicherweise mit seltenen Erden, beispielsweise Erbium oder Ytterbium.

Für den Aufbau des Resonators sind verschiedene Konfigurationen möglich. Bekannt sind lineare Resonatoren, in denen die Faser zwischen zwei Reflektoren angeordnet ist.

Einen derartigen Faserlaser offenbart die Druckschrift US 6 570 892 B1.

Der dort beschriebene Faserlaser enthält einen optischen Resonator, welcher durch einen ersten und einen zweiten Reflektor definiert wird, eine Pumplichtquelle, welche ein Pumplicht bei einer bestimmten Wellenlänge oder in einem bestimmten Spektralbereich generiert, eine dotierte Faser, welche innerhalb des Resonators angeordnet ist und mit dem Pumplicht abgestimmt ist, einen optischen Koppler zum Einkoppeln des Pumplichts in die Faser, und einen sättigbaren Absorber, welcher benachbart zum zweiten Reflektor angeordnet ist und eine Intensitätsabhängige Absorption bei der Laser-Wellenlänge bewirkt.

Die verwendeten Fasern können insbesondere Fasern sein, welche die Polarisation erhalten. Dadurch wird die Laser-Polarisation entlang einer Hauptachse gehalten, ohne dass weitere Elemente nötig sind, um die Polarisation innerhalb des Lasers aufrechtzuerhalten.

Aufgrund der polarisationserhaltenden Eigenschaft solcher Fasern ist das diesen Fasern geführte Laserlicht gegen äußere Störungen sehr unempfindlich. In nicht-polarisationserhaltenden Fasern kann durch äußere Störungen, beispielsweise akustische Schwingungen, die den Brechungsindex der Faser lokal verändern, das Laserlicht bzw. der Laserpuls in seiner Ausbreitung nachhaltig gestört und somit der Betrieb des Lasers destabilisiert werden.

Polarisationserhaltende Fasern bieten sich somit insbesondere dann an, wenn ein stabiler Betrieb des Lasers gewünscht wird.

Der sättigbare Absorber ist ein nichtlineares Element, welches passiv verschiedene longitudinale Moden koppelt. Auf diese Weise können insbesondere kurze Laserpulse bei der Laser-Wellenlänge erzeugt werden.

Der Aufbau eines Faserlaser wie in der Druckschrift US 6 570 892 B1 beschrieben ist auf die Erzeugung von Solitonen ausgelegt. Dies zeigt sich daran, dass die Dispersion der Faser im durch das Verstärkermedium vorgegebenen Frequenzbereich anomal, d.h., β₂ [ps²/m] < 0, ist.

Selbstähnliche Pulse können allerdings mit solch einem Aufbau nicht erzeugt werden.

Selbstähnliche Pulse haben eine parabolische Form, im Gegensatz zu der Form der Solitonen, die durch eine Sekanshyperbolikus-Funktion bestimmt wird. Selbstähnliche Pulse können während ihrer Propagation gestreckt oder gestaucht werden, behalten allerdings ihre parabolische Form bei. Bei hohen Pulsenergien können nur parabolische Pulse, im Gegensatz zu Solitonen und anderen Pulsformen, im Resonator ohne auseinander zu brechen propagieren ("wave breaking free propagation").

In Faserlasern konnten bisher Solitonen bis zu einer Energie von etwa 10 pJ erzeugt werden. Selbstähnliche Pulse zeichnen sich gegenüber Solitonen und anderen Pulsarten dadurch aus, dass wesentlich höhere Pulsenergien möglich sind, dass insbesondere (wegen der parabolischen Form) auch kurze Pulse mit hohen Energien erzeugt werden können, speziell in nachfolgenden Verstärkern.

In der Druckschrift US 2005/0169324 A1 ist ein Faserlaser offenbart, der zur Erzeugung von selbstähnlichen Pulsen geeignet ist. Der dort gezeigte Resonator ist als Ringresonator ausgebildet. Die Gesamtdispersion des dort beschriebenen Lasers ist normal. Eine Modenkopplung wird durch eine nichtlineare Polarisationsdrehung zusammen mit einem Polarisationsstrahlteiler erzeugt.

Auch in der Veröffentlichung "Femtosecond fiber lasers with pulse energies above 10 nJ" von J. R. Buckley et al., 2005 erschienen in "optics letters" Vol. 30 No. 14, sowie der Veröffentlichung "Self-Similar Evolution of Parabolic Pulses in a Laser" von F. Ö. Ilday et al., 2004 erschienen in "Physical Review Letters" Vol. 92 No. 21, sind Faserlaser zur Erzeugung von selbstähnlichen Pulsen beschrieben.

Aufgabe der vorliegenden Erfindung ist es somit, einen Faserlaser mit einem linearen Resonator zu schaffen, welcher es ermöglicht, selbst-ähnliche Laserpulse in einem stabilen Betrieb zu erzeugen.

Die Erfindung löst die Aufgabe durch einen Faserlaser nach dem unabhängigen Anspruch.

Die Erfindung schafft einen Faserlaser, insbesondere zur Erzeugung von selbstähnlichen Pulsen, enthaltend eine Pumpquelle und einen linearen Resonator, wobei der lineare Resonator zwei Reflektoren, eine polarisationserhaltende, mit einem Verstärkermedium dotierte Faser mit einer im durch das Verstärkermedium vorgegebenen Frequenzbereich normalen Dispersion β₂ > 0, ein dispersionskompensierendes Element mit einer anomalen Dispersion β₂ < 0, ein Element zum Auskoppeln von Strahlung und ein nichtlineares Modenkopplungselement mit einer Modulationstiefe > 0 aufweist, wobei Faser, dispersionskompensierendes Element, Element zum Auskoppeln von Strahlung und nichtlineares Modenkopplungselement zwischen den beiden Reflektoren in einem durch die Resonatoren begrenzten gemeinsamen Strahlengang angeordnet sind und die Gesamtdispersion der im Strahlengang des Resonators angeordneten Komponenten normal ist.

Die Gesamtdispersion des Resonators ist normal, d.h., β₂ > 0, um die Erzeugung von selbstähnlichen Pulsen überhaupt erst zu ermöglichen. Diese Dispersion wird durch die Wahl der im Strahlengang angeordneten optischen Komponenten bestimmt.

Des weiteren besitzt erfindungsgemäß die polarisationserhaltende Faser eine normale Dispersion.

Grundsätzlich wäre es denkbar, eine Faser mit anomaler Dispersion zu verwenden, und diese Dispersion durch weitere optische Komponenten auszugleichen, so dass das Gesamtsystem eine normale Dispersion hat. Allerdings zeigte sich, dass mit einer Faser mit anomaler Dispersion ein stabiler Betrieb des Lasers mit selbstähnlichen Pulsen nicht möglich ist.

Um die Dispersion innerhalb des Resonators zur Ausbildung der gewünschten Pulsform geeignet einstellen zu können, ist ein dispersionkompensierendes Element vorgesehen. Inbesondere kann mittels dieses Elementes nahezu unabhängig von der Dispersion der Faser die Dispersion in einen Bereich gesetzt werden, in dem die Erzeugung selbstähnlicher Pulse möglich ist.

Durch das nichtlineare Modenkopplungselement mit einer Modulationstiefe > 0 ist insbesondere ein selbststartender Betrieb des Lasers möglich.

Aufgrund der Trennung von Modenkopplungselement von den anderen Komponenten, speziell der Faser, können insbesondere polarisationserhaltende Fasern verwendet werden, um eine Verstärkung und Pulsformung zu erreichen. Aufgrund dessen, dass polarisationserhaltende Fasern eingesetzt werden, ist ein stabiler Betrieb des Lasers auch im Falle äußerer Störungen, welche Änderungen in der Doppelbrechung erzeugen, möglich.

Als Pumpquelle eignen sich grundsätzlich sämtliche Lichtquellen, die Pumplicht in Resonanz mit zumindest einer der Übergänge der dotierten Faser erzeugen. Beispielsweise können LEDs oder vorzugsweise Laserdioden eingesetzt werden.

Durch Änderung der Dispersion und/oder der Leistung ist es möglich, auch andere Betriebsmodi einzustellen, beispielsweise ein Modus, in dem gestreckte Pulse erzeugt werden, oder, insbesondere durch höhere Leistungen im Resonator, den sog. "Bound State"-Betrieb, in dem mehrere Pulse im definierten Abstand und Wiederholrate im Resonator umlaufen. Erfindungsgemäß bevorzugt ist allerdings die Erzeugung von selbstähnlichen Pulsen.

Anstelle von polarisationserhaltenden Fasern lassen sich auch Fasern einsetzten, in denen nur eine Polarisation geführt führt. Im folgenden soll diese Art der Fasern bei der Erwähnung von polarisationserhaltenden Fasern als Alternative mit einbezogen sein, ohne nochmals ausdrücklich darauf hinzuweisen.

Vorteilhafte Weiterbildungen werden in den abhängigen Ansprüchen beschrieben.

Eine vorteilhafte Weiterbildung der Erfindung sieht vor, dass die Gesamtdispersion der im Strahlengang des Resonators der Länge L angeordneten Komponenten im Bereich von β₂*L = 0,008 ps² bis β₂*L = 0,1 ps², vorzugsweise von β₂*L = 0,01 ps² bis β₂*L = 0,05 ps² liegt.

In dem Bereich von β₂*L = 0,008 ps² bis β₂*L = 0,1 ps² ist ein stabiler Betrieb des Lasers mit selbstähnlichen Pulsen möglich, wobei allerdings die Stabilität zu den Grenzen des angegebenen Bereichs hin abnimmt. Bevorzugt liegt deswegen die Dispersion des Resonators im Bereich von β₂*L = 0,01 ps² bis β₂*L = 0,05 ps2 .

Diesbezüglich ist anzumerken, dass obiger Dispersionsbereich ein Kriterium für die Erzeugung selbstähnlicher Pulse in einem linearen Resonator ist. Im allgemeinen lässt sich solch ein Kriterium auf andere Resonatorgeometrien, beispielsweise. Resonatoren mit einer Ringgeometrie, nicht übertragen. Dieses Kriterium kann je nach Ringgeometrie stark unterschiedlich ausfallen.

Eine vorteilhafte Weiterbildung der Erfindung sieht vor, dass das dispersionskompensierende Element eine zumindest vernachlässigbare Kerr-Nichtlinearität aufweist.

Der Kerr-Effekt ist ein nichtlinearer Effekt, dessen Ursprung eine in einem Medium erzeugte nichtlineare Polarisierung ist, welche die Ausbreitung des Lichts verändert. Aufgrund dieser Nichtlinearität stört, falls nicht vernachlässigbar klein, dieser Effekt die Pulsevolution innerhalb des Resonators, insbesondere die Pulsevolution selbstähnlicher Pulse.

Eine vorteilhafte Weiterbildung der Erfindung sieht vor, dass der Resonator ein im Strahlengang des Resonators angeordnetes Element zum Einkoppeln von Licht der Pumpquelle aufweist, wobei das Element zum Einkoppeln vorzugsweise ein dichroitischer Spiegel, ein Fäserkoppler oder ein Wellenlängenmultiplexer ist.

Eine vorteilhafte Weiterbildung der Erfindung sieht vor, dass die Modulationstiefe des nichtlinearen Modenkopplungselements >1%, vorzugsweise >10% ist.

Eine vorteilhafte Weiterbildung der Erfindung sieht vor, dass das nichtlineare Modenkopplungselement ein sättigbarer Halbleiterspiegel ist.

Ein sättigbarer Halbleiterspiegel (SESAM) ist eine Kombination von Spiegel und sättigbaren Absorber, welche in Halbleitertechnologie gefertigt sind. Üblicherweise enthält solch ein SESAM ein Bragg-Spiegel und eine Absorberschicht. Durch die Variation des Materials und des Designs können die Parameter des SESAMs, wie beispielsweise Wellenlänge, Modulationstiefe und Regenerationszeit, auf bestimmte Anwendungen angepasst werden.

Ein derartiger Halbleiterspiegel bewirkt eine passive Modenkopplung. Ein aktives Element zur Modenkopplung ist somit nicht notwendig. Des weiteren ersetzt der Halbleiterspeigel einen der beiden Reflektoren, wodurch sich der Aufbau um eine Komponente reduziert.

Alternativ lässt sich anstatt eines SESAMS auch ein sättigbarer Absorber in Kombination mit einem der beiden Reflektoren einsetzten. Der Absorber würde in diesem Falle in Transmission arbeiten.

Die Modulationstiefe ist im Zusammenhang mit sättigbaren Absorbern die maximale Änderung der Absorption/Reflektion, welche durch auf den Absorber treffendes Licht mit einer bestimmten Wellenlänge und Intensität bewirkt wird. Die Modulationstiefe entscheidet somit über den Prozess der Modenkopplung eines im Resonator propagierenden Pulses.

Die Modulationstiefe ist für das Selbststarten des Lasers ein bestimmender Parameter. Die Modulationstiefe steht diesbezüglich mit der Verstärkung des Resonators im Zusammenhang. Ist die Verstärkung im Resonator gering, so ist eine geringe Modulationstiefe notwendig, um das Selbststarten des Lasers zu ermöglichen. Bei hohen Verstärkungen kann für die Modulationstiefe ebenfalls ein entsprechend höherer Wert gewählt werden.

Erfindungsgemäß bevorzugt wird eine Modulationstiefe von > 10%, da dies vorteilhaft für eine ausreichend schnelle Pulsformung ist. Grundsätzlich möglich sind aber auch kleinere Modulationstiefen, beispielsweise im Bereich >1%.

Eine vorteilhafte Weiterbildung der Erfindung sieht vor, dass das dispersionskompensierende Element ein Gitterkompressor, ein resonanter sättigbarer Absorber, ein Prismenkompressor und/oder eine Hohlkernfaser ist.

Diese Elemente erfüllen insbesondere die Voraussetzung, falls überhaupt, zumindest eine vernachlässigbare Kerr-Nichtlinearität zu haben.

Eine vorteilhafte Weiterbildung der Erfindung sieht vor, dass das Element zu Auskoppeln ein Wellenlängenmultiplexer, ein Faserkoppler, ein Polarisator, oder einer der beiden Reflektoren ist, der als teilreflektierender Spiegel ausgebildet ist.

Eine vorteilhafte Weiterbildung der Erfindung sieht vor, dass der Resonator zur Pulsformung eine im Strahlengang des Resonators angeordnete polarisationserhaltende Einzelmodenfaser mit normaler Dispersion aufweist.

Über die Länge solch einer Faser kann insbesondere die Pulsrate des Lasers auf die gewünschte Größe eingestellt werden. Dabei ist es aus Gründen der Stabilität des Laserbetriebs vorteilhaft, eine polarisationserhaltende Faser einzusetzen. Erfindungsgemäß bevorzugt sind sämtliche Fasern innerhalb des Resonators polarisationserhaltende Fasern.

Eine vorteilhafte Weiterbildung der Erfindung sieht vor, dass die Faser eine Einkernfaser oder eine Doppelkernfaser ist.

Insbesondere Doppelkernfasern eignen sich für einen Betrieb des Lasers, in dem hohe Pulsenergien erzeugt werden. In solch einer Faser läuft das Laserlicht innerhalb eines (polarisationserhaltenden) Kernes der Faser, das Pumplicht läuft im wesentlichen in einem inneren Mantel, der diesen Kern umgibt. Ein weiterer, äußerer Mantel um den inneren Mantel mit niedrigeren Brechungsindex verhindert ein Austreten des Pumplichtes aus der Faser. Das Pumplicht tritt bei seiner Ausbreitung in der Faser durch den inneren Kern der Faser hindurch. Laser-aktive Atome innerhalb des Kerns können auf diese Weise angeregt werden.

Doppelkernfasern erlauben im Vergleich mit Einzelkernfasern die Einkopplung von Pumplicht mit höherer Leistung.

Als Material solcher Fasern bietet sich beispielsweise Quarzglas an.

Eine vorteilhafte Weiterbildung der Erfindung sieht vor, dass das verstärkermedium Ytterbium (Yb), Erbium (Er) oder Neodym (Nd) oder eine Mischung dieser Elemente ist.

Yb, Er oder Nd dotierte Quarzglasfasern haben im Frequenzbereich der Laser-Übergänge eine normale Dispersion. Diese Elemente eignen sich somit für einen Faserlaser der beschriebenen Art.

Die Erfindung wird nun anhand mehrerer Ausführungsbeispiele eines erfindungsgemäßen Faserlasers einschließlich Figuren beschrieben.

Dabei zeigt
- Fig. 1: eine erste Ausführungsform eines erfindungs- gemäßen Faserlasers,
- Fig. 2: eine zweite Ausführungsform eines erfindungs- gemäßen Faserlasers,
- Fig. 3-4: Ergebnisse, welche mit einem erfindungsge- mäßen Faserlaser, wie im ersten und zweiten Ausführungsbeispiel beschrieben, erhalten wurden,
- Fig. 5-12: eine dritte bis eine meunte Ausführungsform eines erfindungsgemäßen Faserlasers, sowie eine weitere Ausführungsform eines Faserlasers.

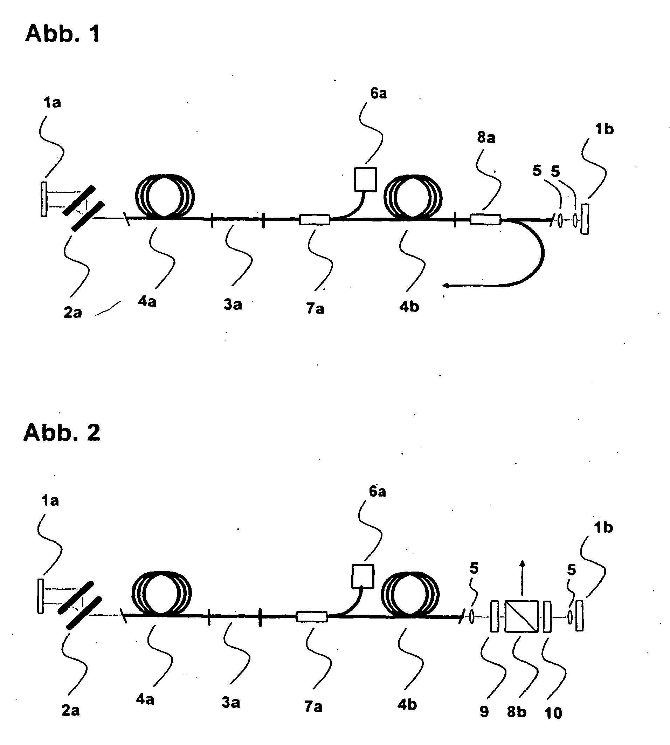

Figur 1 zeigt eine erste Ausführungsform eines erfindungsgemäßen Faserlasers.

Dargestellt ist ein Faserlaser mit einer Pumpquelle 6 und einem linearen Resonator. Der Resonator enthält zwei Reflektoren 2, eine polarisationserhaltende, mit einem Verstärkermedium dotierte Faser 4 mit einer normalen Dispersion β₂ > 0, ein dispersionskompensierendes Element 2 mit einer anomalen Dispersion, ein Element zum Auskoppeln der Strahlung 8 und ein nichtlineares Modenkopplungselement.

Des weiteren ist ein Element 7 zum Einkoppeln der Strahlung der Pumpquelle vorhanden, sowie zwei polarisationserhaltende Einzelmodenfasern 4 mit normaler Dispersion.

Die optischen Komponenten sind in einem von den Reflektoren 1 definierten gemeinsamen Strahlengang angeordnet.

Der eine äußere Reflektor ist in diesem Ausführungsbeispiel ein 100%-reflektierender Spiegel 1a.

Vor dem Spiegel la ist als dispersionskompensierendes Element 2 ein Gitterkompressor 2a angeordnet. Der Gitterkompressor 2a weist zwei Gitter aus Quarzglas mit einem Gitterabstand von 1250,Linien/mm mit einem hohen Transmissionsgrad im erster Ordnung (>95% von 1020 - 1080 nm) auf. Die Gitter wurden im Lithrow-Winkel (40°) angeordnet in einem Abstand von etwa 16 mm.

Danach folgt eine polarisationserhaltende Einzelmoden Faser 4a aus Quarzglas vom Typ PANDA 980 mit einem Modenfeld-Durchmesser von 7 µm bei einer Wellenlänge von 1035 nm und einer Dispersion von 0,024 ps²/m. Die Länge des Faser beträgt in diesem Falle 2,60 m, um eine bestimmte Pulsformung und Wiederhohlrate umzusetzten. Grundsätzlich kann diese Faser je nach Anwendungszweck auch andere Längen oder Durchmesser aufweisen.

Die Faser 4a ist nicht direkt mit dem Gitterkompressor verbunden, zwischen ihnen existiert ein Spalt. Um einen gerichteten und nicht-streuenden Austritt des Lichts aus der Faser zu ermöglichen, ist die Faser unter einem kleinen Winkel (-8°) poliert.

Die Faser 4a ist an ihrem anderen Ende mit der dotierten Faser 3 verbunden. Die Faser 3 ist in diesem Falle eine 310 mm lange, Yb dotierte polarisationserhaltende Faser 3a aus Quarzglas. Die Absorption des Pumplichts der Faser beträgt ungefähr 300dB/m bei einer Wellenlänge von 976 nm, der Modenfeld-Durchmesser 4,8 µm. In diesem Faserabschnitt wird das im Resontor propagierende Licht bzw. der Laserpuls durch resonante Wechselwirkung verstärkt. Die hier verwendete minimale Länge der Verstärkungsfaser 3a erlaubt es, Filtern des Verstärkungsspektrums und nichtlineare Entwicklung des Laserlichtes innerhalb der undotierten Fasern 4 zu entkoppeln, weil der Effekt von GVD (group velocity dispersion) und Nichtlinearität während der Verstärkung vernachlässigt werden kann.

Mit dem anderen Ende der Faser 3a ist das Element zum Einkoppeln des Pumplichts 7 verbunden, hier ein Wellenlängenmultiplexer (WDM) 7a. Als Pumpquelle 6 wurden in diesem Falle ein Einzelmodendiode 6a mit einer maximalen Ausgangsleistung von 400mW bei einer Wellenlänge von 976 nm verwendet.

Mit dem WDM 7a ist eine weitere polarisationserhaltende Einzelmodenfaser Faser 4 verbunden. Diese Faser 4b ist vom gleichen Typ wie die Faser 4a, allerdings beträgt die Länge 2,69 m.

Das andere Ende des Faser 4b ist mit dem Element zum Auskoppeln 8, hier ein polarisationserhaltender Faserkoppler 8a, verbunden. Das Auskoppelverhältnis beträgt in diesem speziellen Fall 30:70.

Der Resonator wird schließlich abgeschlossen durch einen zweiten Reflektor 1, hier einem sättigbaren Spiegel (SAM) 1b. Als sättigbarer Spiegel wurde ein antiresonanter Fabry-Perot sättigbarer Halbleiterspiegel eingesetzt mit einer Modulationstiefe von etwa 30%, einer Sättigunsschwelle von etwa 100µJ/cm² und einer Regenerationszeit im Pikosekundenbereich.

Um die Sättigungsschwelle zu erreichen ist mittels zweier Linsen 5 ein Teleskop realisiert, welches das Laserlicht auf den Absorber 1b fokussiert.

Um eine gute optische Verbindung zwischen den einzelnden Fasern zu gewährleisten, wurden die Fasern aneinander gespleißt.

Um zu gewährleisten, dass nur eine Polarisationsachse ausgebildet wird, hier die langsame Achse, wurde zwischen Gitterkompressor 2a und Faser 4a eine λ/2-Plättchen angeordnet.

Figur 2 zeigt eine zweite Ausführungsform eines erfindungsgemäßen Faserlasers.

Der Aufbau der zweiten Ausführungsform gleicht dem Aufbau der ersten Ausführungsform, allerdings ist der Faserkoppler 8a durch einen Polarisator 8b als Auskoppler ersetzt. Auf der einen Seite des Polarisators ist ein λ/4-Plättchen 9 angeordnet, auf der ananderen Seite ein weiteres λ/2-Plättchen 10. Es ist auch möglich, Polarisationsachse und Gitter des Polarisators 8b so anzuordnen, dass auf das λ/2-Plättchen 10 verzichtet werden kann.

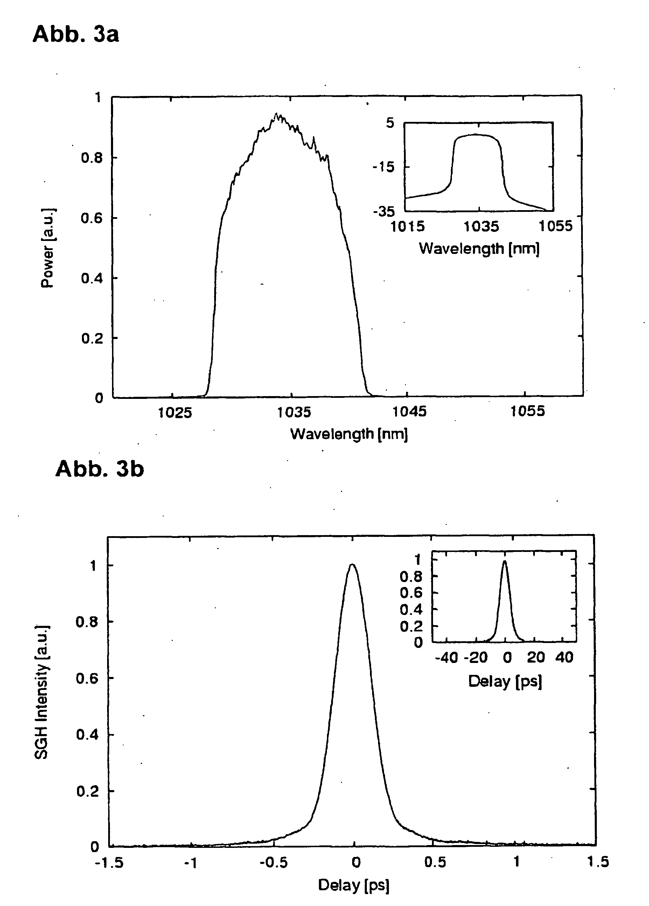

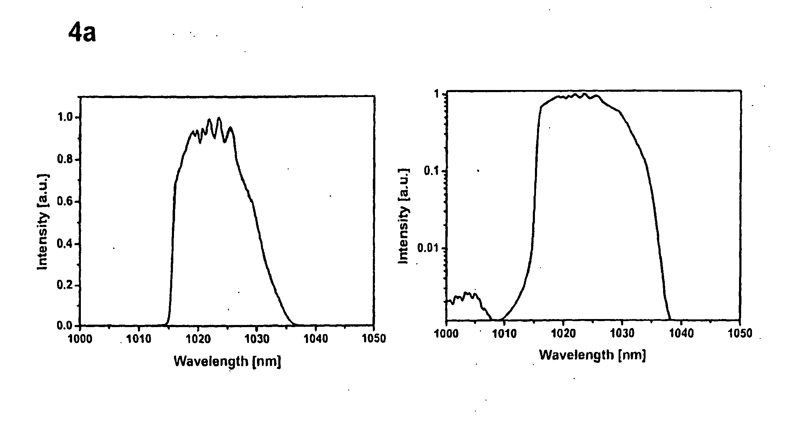

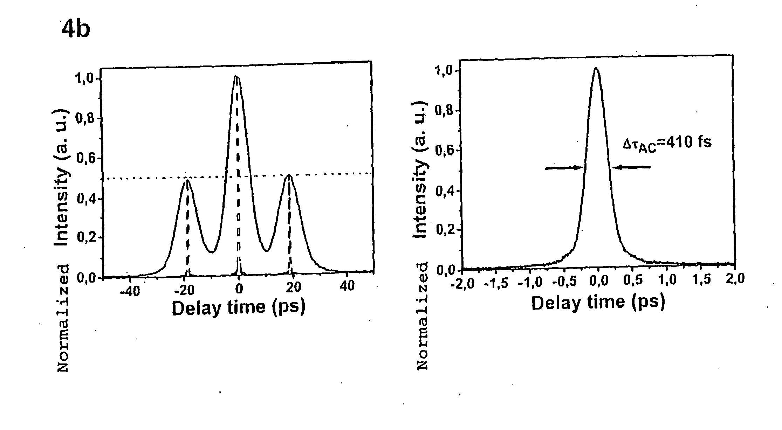

Figur 3 und Figur 4 zeigen Ergebnisse, welche mit einem erfindungsgemäßen Faserlaser wie im ersten und zweiten Ausführungsbeispiel beschrieben, erhalten wurden.

Figur 3a zeigt ein Ausgangsspektrum des erfindungsgemäßen Faserlasers im selbstähnlichen Betriebsmodus. Die selbstähnlichen Pulse sind erkennbar an der parabolischem Verlauf des Spektrums. Die Gesamtdispersion der Komponenten im Strahlengang des Resonators betrug etwa 0,03 ps².

Figur 3b zeigt eine Autokorrelation eines Laserpuls, der extern auf 210 fs (280 fs FWHM) komprimiert wurde.

Figur 4a zeigt ein Ausgangsspektrum des erfindungsgemäßen Faserlasers im strechted-pulse-Betriebsmodus, d.h., es werden Pulse nicht parabolischer Form erzeugt.

Figur 4b zeigt die Autokorellation vor und nach der externen Kompression im bound-state-Modus.

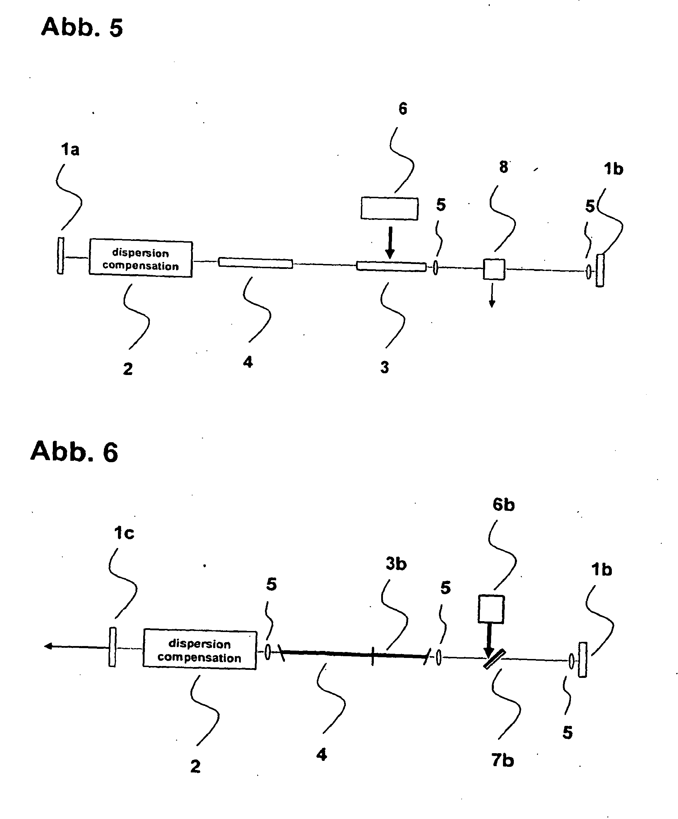

Der Aufbau des erfindungsgemäßen Faserlasers ist nicht auf die erste und zweite Ausführungsform beschränkt. Die Figuren 5 bis 12 zeigen diesbezüglich weitere Alternativen.

Figur 5 zeigt eine dritte Ausführungsform eines erfindungsgemäßen Faserlasers

Der Faserlaser besteht aus einer Pumpquelle 6 und einem linearen Resonator. Der Resonator enthält zwei Reflektoren 1, hier einen vollständig reflektierender Spiegel 1a und einen sättigbaren Halbleiterspiegel 1b mit einer Modulationstiefe >0. In den durch die Reflektoren 1a und 1b definierten Strahlengang ist ein dispersionkompensierendes Element 2 mit einer anomalen Dispersion und einer vernachlässigbaren Kerr-Nichlinearität, eine polarisationserhaltende Einzelmodenfaser 4 mit normaler Dispersion, eine polarisationserhaltende, mit einem Verstärkermedium dotierte Faser 3 mit normaler Dispersion und ein Element zum Auskoppeln von Strahlung bzw. Laserlicht 8 angeordnet. Über eine Pumpquelle 6 kann die dotierte Faser 3 gepumpt werden. Des weiteren sind zwei optische Elemente, hier Linsen 5, im Stahleingang angeordnet.

Figur 6 zeigt eine vierte Ausführungsform eines erfindungsgemäßen Faserlasers.

Die vierte Ausführungsform ist eine Konkretisierung des als dritte Ausführungsform beschriebenen Faserlasers.

Der eine Reflektor 1 ist in diesem Ausführungsbeispiels ein teilreflektrierender Spiegel, über den Leistung aus dem Resonator ausgekoppelt werden kann. Element 8 zum Auskoppeln und Reflektor 1 werden somit durch eine Komponente gestellt.

Die Pumpquelle 6 ist ein Multimoden(MM)-Diode 6b mit einer Pumpwellenlänge von 976nm. Das Pumplicht wird über einen dichroitischen Spiegel 7b in den Strahlengang des Resonators eingekoppelt.

Die Faser 3 ist eine mit Yb dotierte, polarisationserhaltende Doppelkernfaser 3b mit normaler Dispersion.

Die Fasern 3b und 4 sind zu einer Faser zusammengespleißt. Die Enden der Faser wurden unter einem kleinen Winkel (-8°) poliert.

Beidseitig der Fasern 3b und 4 ist jeweils eine Linse 5 für die Formung des Strahlengangs angeordnet.

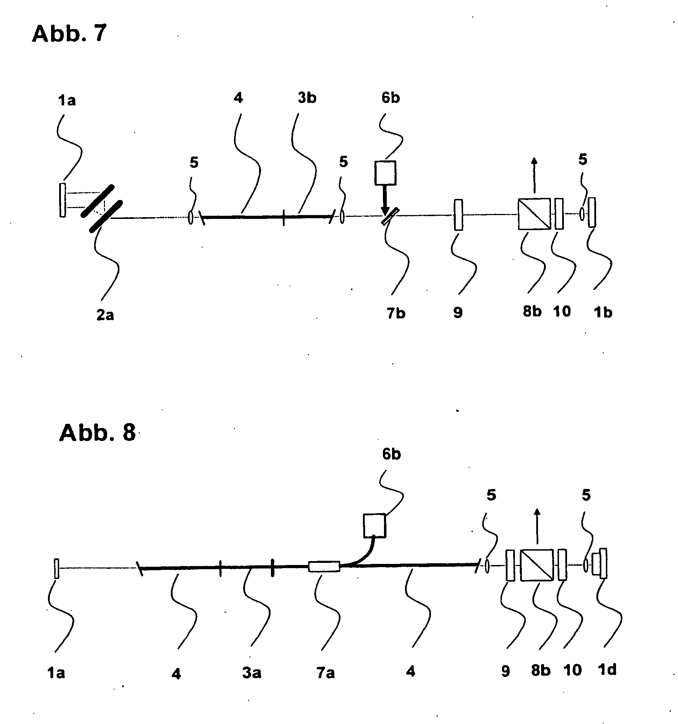

Figur 7 zeigt eine fünfte Ausführungsform eines erfindungsgemäßen Faserlasers.

Die fünfte Ausführungsform ist eine Abwandlung der vierten Ausführungsform. Anstatt des teilreflektierenden Spiegels 1c wird ein vollständig reflektierender Spiegel la verwendet. Zum Auskoppeln von Laserlicht ist ein Polarisator 8b in den Strahlengang angeordnet. Auf der einen Seite des Polarisators ist ein λ/4-Plättchen 9 angeordnet, auf der anderen Seite ein λ/2-Plättchen 10. Als dispersionkompensierendes Element wird in dieser Ausführungsform ein Gitterkompressor eingesetzt, welcher als nächstes optisches Element zum Spiegel 1a angeordnet ist.

Figur 8 zeigt eine sechste Ausführungsform eines erfindungsgemäßen Faserlasers.

Im Gegensatz zur fünften Ausführungsform ist die Faser 3 eine polarisationserhaltendende, mit Yb dotierte Einfachkernfaser 3a mit normaler Dispersion. Die Pumpquelle 6 ist dementsprechend eine Einzelmoden-Pumpquelle.

Als Element zum Einkoppeln wird anstatt des dichromtischen Spiegels ein polarisationserhaltender WDM 7a verwendet. Der WDM ist optisch einerseits mit der Pumpquelle, andererseits mit der Faser 3a und einer weiteren Einzelmoden-Faser 4 verbunden.

Als einer der beiden Reflektoren wird ein spezieller sättigbarer resonanter Halbleiterspiegel 1d eingesetzt, der einerseits die Funktion des Reflektors 1, andererseits auch die Funktion des nichtlinearen Modenkopplungselementes und des dispersionskompensierenden Elementes 2 erfüllt.

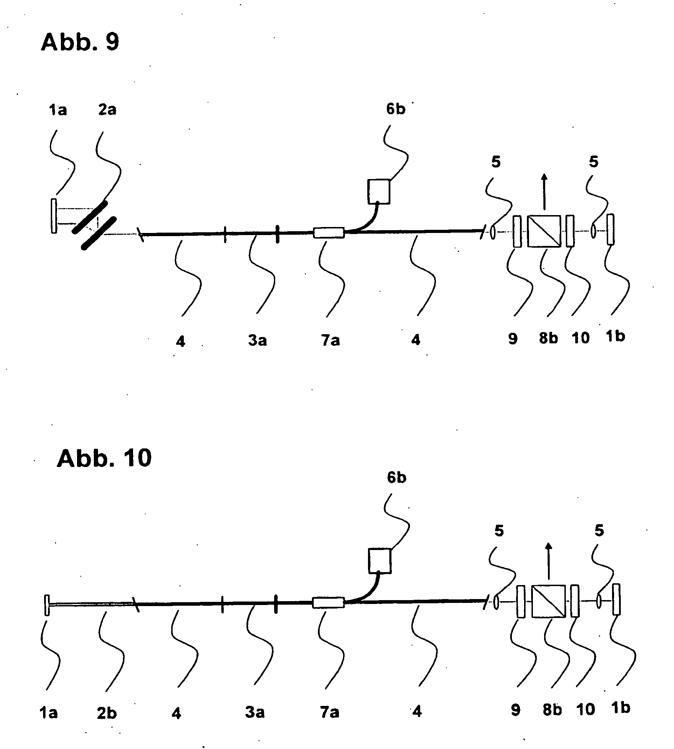

Figur 9 zeigt eine siebte Ausführungsform eines erfindungsgemäßen Faserlasers.

Im Gegensatz zu der sechsten Ausführungsform wird als dispersionskompensierendes Element ein Gitterkompressor 2a eingesetzt.

Figur 10 zeigt eine achte Ausführungsform eines erfindungsgemäßen Faserlasers.

Im Gegensatz zu der sechsten Ausführungsform wird als dispersionskompensierendes Element eine Hohlkernfaser 2b eingesetzt.

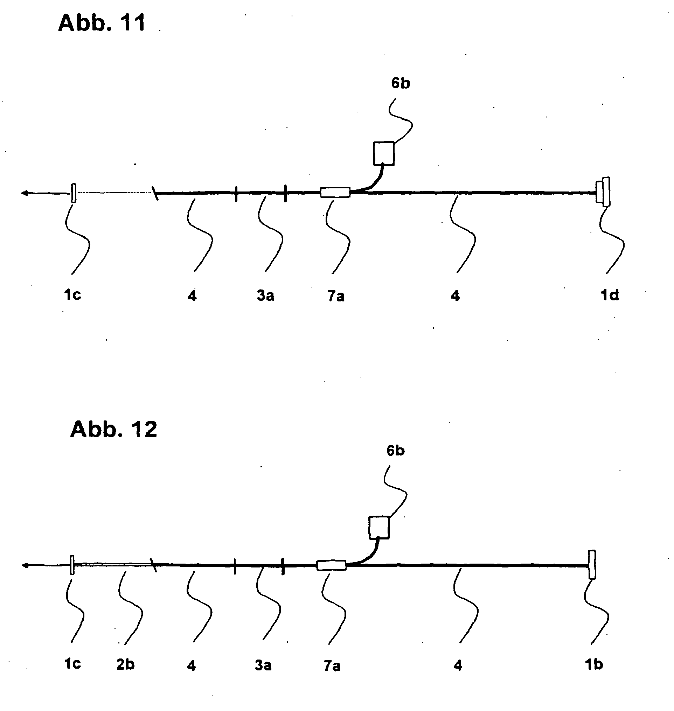

Figur 11 zeigt eine neunte Ausführungsform eines erfindungsgemäßen Faserlasers.

Im Gegensatz zur sechsten Ausführungsform (Fig. 8) wird als Element zum Auskoppeln ein teilreflektierender Spiegel 1c als Reflektor eingesetzt. Die zwischen WDM 7a und resonanten, dispersionskompensierenden sättigbaren Halbleiterspiegel 1d angeordnete Faser 4 ist direkt mit dem Halbleiterspiegel 1d verbunden, hier mittels eines Klebstoffes.

Figur 12 zeigt eine Ausführungsform eines Faserlasers.

Im Gegensatz zur neunten Ausführungsform wird als dispersionskompensierendes Element eine Hohlkernfaser 2b eingesetzt. Diese Hohlkernfaser 2b ist an ihrem einen Ende mit dem Ende der Faser 4 verbunden, mit ihrem anderen Ende direkt mit dem teilreflektierenden Spiegel 1c.

Die in diesen Beispielen beschriebenen dispersionskompensierenden Elemente haben sämtlich eine zumindest vernachlässigbare Kerr-Nichtlinearität. Auch Prismenkompressoren, die noch nicht genannt wurden, können auf diese Weise eingesetzt werden. Anstatt der mit Yb dotierten Fasern 3 können prinzipiell mit anderen Dotierungen, insbesondere mit Nd oder Er, versehene Fasern 3 verwendet werden.

Erfindungsgemäß ist somit ein Faserlaser mit einem einfachen, robusten und preiswerten Aufbau realisierbar, mit dem sich kurze Pulse, insbesondere selbstähnliche Pulse mit hoher Energie erzeugen lassen. Im Falle selbstähnlicher Pulse sind die vom Laser emittierten Pulse linear gechirpt, so dass sie sich außerhalb des Resonators in den Femtosekundenbereich komprimieren lassen. Der erfindungsgemäße Laser ist somit geeignet für eine Vielzahl von Applikationen in der Kurzpulsoptik sowie der Messtechnik. Er ist speziell geeignet als Quelle für Hochleistungsverstärkersysteme, da Pulsformen speziell an Verstärkungsprofile sowie Nichtlinearität angepasst werden können.

## Patentansprüche

1. Faserlaser, insbesondere zur Erzeugung von selbstähnlichen Pulsen, enthaltend eine Pumpquelle (6) und einen linearen Resonator, wobei der lineare Resonator zwei Reflektoren (1), eine polarisationserhaltende, mit einem Verstärkermedium dotierte Faser (3) mit einer im durch das Verstärkermedium vorgegebenen Frequenzbereich normalen Dispersion β₂ > 0, ein dispersionskompensierendes Element (2) mit einer anomalen Dispersion β₂ < 0, ein Element zum Auskoppeln von Strahlung (8) und ein nichtlineares Modenkopplungselement (1c) mit einer Modulationstiefe > 0 aufweist, wobei Faser (3), dispersionskompensierendes Element (2), Element zum Auskoppeln von Strahlung (8) und nichtlineares Modenkopplungselement (1b, 1c) zwischen den beiden Reflektoren (1) in einem durch die Reflektoren (1) begrenzten gemeinsamen Strahlengang angeordnet sind und die Gesamtdispersion der im Strahlengang des Resonators angeordneten Komponenten normal ist.

2. Faserlaser nach Anspruch 1, **dadurch gekennzeichnet, dass** die Gesamtdispersion der im Strahlengang des Resonators der Länge L angeordneten Komponenten im Bereich von β₂*L = 0,008 ps² bis β₂*L = 0,1 ps², vorzugsweise von β₂*L = 0,01 ps² bis β₂*L = 0,05 ps² liegt.

3. Faserlaseranordnung nach einem der vorhergehenden Ansprüche, **dadurch gekennzeichnet, dass** das dispersionskompensierende Element (2) eine zumindest vernachlässigbare Kerr-Nichtlinearität aufweist.

4. Faserlaseranordnung nach einem der vorhergehenden Ansprüche, **dadurch gekennzeichnet, dass** der Resonator ein im Strahlengang des Resonators angeordnetes Element (7) zum Einkoppeln von Licht der Pumpquelle (6) aufweist, wobei das Element zum Einkoppeln vorzugsweise ein dichroitischer Spiegel (7b), ein Faserkoppler oder ein wellenlängenmultiplexer (7a) ist.

5. Faserlaseranordnung nach einem der vorhergehenden Ansprüche, **dadurch gekennzeichnet, dass** die Modulationstiefe des nichtlinearen Modenkopplungselements >1%, vorzugsweise >10% ist.

6. Faserlaseranordnung nach einem der vorhergehenden Ansprüche, **dadurch gekennzeichnet, dass** das nichtlineare Modenkopplungselement ein sättigbarer Halbleiterspiegel (1c) ist.

7. Faserlaser nach einem der vorhergehenden Ansprüche, **dadurch gekennzeichnet, dass** das dispersionskompensierende Element (2) ein Gitterkompressor (2a), ein resonanter sättigbarer Absorber (1c), ein Prismenkompressor und/oder eine Hohlkernfaser (2b) ist.

8. Faserlaseranordnung nach einem der vorhergehenden Ansprüche, **dadurch gekennzeichnet, dass** das Element (8) zum Auskoppeln ein Wellenlängenmultiplexer, ein Faserkoppler (8a), ein Polarisator (8b), oder einer der beiden Reflektoren (1) ist, der als teilreflektierender Spiegel (1c) ausgebildet ist.

9. Faserlaseranordnung nach einem der vorhergehenden Ansprüche, **dadurch gekennzeichnet, dass** der Resonator zur Pulsformung eine im Strahlengang des Resonators angeordnete polarisationserhaltende Einzelmodenfaser (4) mit normaler Dispersion aufweist.

10. Faserlaser nach einem der vorhergehenden Ansprüchen, **dadurch gekennzeichnet, dass** die Faser (3, 4) eine Einkernfaser oder eine Doppelkernfaser ist.

11. Faserlaser nach einem der vorhergehenden Ansprüche, **dadurch gekennzeichnet, dass** das Verstärkermedium Ytterbium (Yb), Erbium (Er) oder Neodym (Nd) oder eine Mischung dieser Elemente ist.

## Claims

1. Fibre laser, in particular for the production of self-similar pulses, containing a pumped source (6) and a linear resonator, the linear resonator having two reflectors (1), a polarisation-maintaining fibre (3) doped with an amplifying medium with a normal dispersion β₂ > 0 in the frequency range prescribed by the amplifying medium, a dispersion-compensating element (2) with an anomalous dispersion (β₂ < 0, an element for decoupling radiation (8) and a non-linear mode coupling element (1c) with a modulation depth > 0, fibre (3), dispersion-compensating element (2), element for decoupling radiation (8) and non-linear mode coupling element (1b, 1c) being disposed between the two reflectors (1) in a common beam path delimited by the reflectors (1) and the total dispersion of the components disposed in the beam path of the resonators being normal.

2. Fibre laser according to claim 1, **characterised in that** the total dispersion of the components disposed in the beam path of the resonator of length L is in the range of β₂*L = 0.008 ps² to β₂*L = 0.1 ps², preferably from β₂*L = 0.01 ps² to (β²*L = 0.05 ps².

3. Fibre laser arrangement according to one of the preceding claims, **characterised in that** the dispersion-compensating element (2) has an at least negligible Kerr non-linearity.

4. Fibre laser arrangement according to one of the preceding claims, **characterised in that** the resonator has an element (7) disposed in the beam path of the resonator for coupling light of the pumped source (6), the element for coupling preferably being a dichroic mirror (7b), a fibre coupler or a wavelength multiplexer (7a).

5. Fibre laser arrangement according to one of the preceding claims, **characterised in that** the modulation depth of the non-linear mode coupling element is > 1%, preferably > 10%.

6. Fibre laser arrangement according to one of the preceding claims, **characterised in that** the non-linear mode coupling element is a saturable semiconductor mirror (1c).

7. Fibre laser according to one of the preceding claims, **characterised in that** the dispersion-compensating element (2) is a grid compressor (2a), a resonant saturable absorber (1c), a prism compressor and/or a hollow core fibre (2b).

8. Fibre laser arrangement according to one of the preceding claims, **characterised in that** the element (8) for decoupling is a wavelength multiplexer, a fibre coupler (8a), a polariser (8b) or one of the two reflectors (1) which is configured as a partially reflecting mirror (1c).

9. Fibre laser arrangement according to one of the preceding claims, **characterised in that** the resonator for pulse formation has a polarisation-maintaining single mode fibre (4) with a normal dispersion which is disposed in the beam path of the resonator.

10. Fibre laser according to one of the preceding claims, **characterised in that** the fibre (3, 4) is a single core fibre or a double core fibre.

11. Fibre laser according to one of the preceding claims, **characterised in that** the amplifying medium is ytterbium (Yb), erbium (Er) or neodymium (Nd) or a mixture of these elements.

## Revendications

1. Laser à fibre, en particulier pour la génération d'impulsions auto-similaires, comportant une source de pompage (6) et un résonateur linéaire, dans lequel le résonateur linéaire présente deux réflecteurs (1), une fibre (3) dopée avec un agent de renfort et maintenant la polarisation et ayant une dispersion normale dans une zone de fréquences prédéterminée par l'agent de renfort (β₂ > 0, un élément compensateur de dispersion (2) ayant une dispersion anomale (β₂ < 0, un élément destiné à la sortie de rayonnement (8) et un élément non linéaire de couplage des modes (1c) avec une profondeur de modulation > 0, dans lequel la fibre (3), l'élément compensateur de dispersion (2), l'élément destiné à la sortie de rayonnement (8) et l'élément non linéaire de couplage des modes (1b, 1c) sont disposés entre les deux réflecteurs (1) dans une trajectoire de faisceau commune délimitée par les réflecteurs (1) et dans lequel la dispersion totale des composants disposés dans la trajectoire de faisceau du résonateur est normale.

2. Laser à fibre selon la revendication 1, **caractérisé en ce que** la dispersion totale des composants disposés dans la trajectoire de faisceau du résonateur de la longueur L se situe dans la plage de β₂*L = 0,008 ps² à β₂*L = 0,1 ps², de préférence dans la plage de β₂*L = 0,01 ps² à (β₂*L = 0,05 ps².

3. Dispositif de laser à fibre selon l'une quelconque des revendications précédentes, **caractérisé en ce que** l'élément compensateur de dispersion (2) présente une non-linéarité Kerr au moins négligeable.

4. Dispositif de laser à fibre selon l'une quelconque des revendications précédentes, **caractérisé en ce que** le résonateur présente un élément (7) disposé dans la trajectoire de faisceau du résonateur pour injecter de la lumière à partir de la source de pompage (6), l'élément d'injection étant de préférence un miroir dichroïque (7b), un coupleur de fibres ou un multiplexeur de longueur d'ondes (7a).

5. Dispositif de laser à fibre selon l'une quelconque des revendications précédentes, **caractérisé en ce que** la profondeur de modulation de l'élément non linéaire de couplage des modes est > 1 %, de préférence > 10 %.

6. Dispositif de laser à fibre selon l'une quelconque des revendications précédentes, **caractérisé en ce que** l'élément non linéaire de couplage des modes est un miroir saturable à semi-conducteurs (1c).

7. Dispositif de laser à fibre selon l'une quelconque des revendications précédentes, **caractérisé en ce que** l'élément compensateur de dispersion (2) est un compresseur à réseau (2a), un absorbant saturable résonant (1c), un compresseur à prisme et/ou une fibre de creux-noyau (2b).

8. Dispositif de laser à fibre selon l'une quelconque des revendications précédentes, **caractérisé en ce que** élément destiné à la sortie de rayonnement (8) est un multiplexeur de longueur d'ondes, un coupleur de fibres (8a), un polariseur (8b) ou un des deux réflecteurs (1), qui se présente sous la forme d'un miroir semi- réfléchissant (1c).

9. Dispositif de laser à fibre selon l'une quelconque des revendications précédentes, **caractérisé en ce que** le résonateur destiné à la formation d'impulsions présente une fibre en mode unique (4) disposée dans la trajectoire du faisceau du résonateur, maintenant la polarisation et ayant une dispersion normale.

10. Laser à fibre selon l'une quelconque des revendications précédentes, **caractérisé en ce que** la fibre (3, 4) est une fibre d'un-noyau ou une fibre de deux noyaux.

11. Laser à fibre selon l'une quelconque des revendications précédentes, **caractérisé en ce que** l'agent de renfort est l'ytterbium (Yb), l'erbium (Er) ou le néodyme (Nd) ou un mélange de ces éléments.
